# EUROPEAN PATENT APPLICATION

(11) **EP 1 701 182 A1**
(43) Date of publication of application: **13.09.2006**
(21) Application number: 06002080.7
(22) Date of filing: 01.02.2006
(51) Int. Cl.: G02B 5/20

(54) **Camera module comprising an infrared cut filter, said filter comprising ultraviolet cut means**

(30) Priority: 10.03.2005 JP 2005067931
(71) Applicant: Mitsumi Electric Co., Ltd., Tama-Shi, Tokyo (JP)
(72) Inventor: Sanpei, Hiroshi, c/o Mitsumi Electric Co., Ltd., Yamagata-shi Yamagata (JP); Yaegashi, Kazuhiro, c/o Mitsumi Electric Co., Ltd., Yamagata-shi Yamagata (JP)
(74) Representative: Solf, Alexander

(57) **Abstract**

A camera module capable of preventing deterioration of a color filter caused by ultraviolet irradiation in a manufacturing process is provided. The camera module includes a substrate, an image pickup device mounted on the substrate and provided with a color filter which recognizes a color of incoming light, a base mounted on the substrate so as to surround the image pickup device, a lens unit provided on the base, and an infrared (IR) cut filter provided on the base so as to be positioned between the lens unit and the image pickup device. The infrared (IR) cut filter includes an ultraviolet (UV) cut means for preventing the color filter from being irradiated with ultraviolet. The infrared (IR) cut filter is provided with a base material made of white plate glass, an AR coating layer and an ultraviolet cut layer laminated on the surface of the base material facing the lens unit, and an infrared cut layer provided on the other surface of the base material facing the image pickup device.

## Description

### BACKGROUND OF THE INVENTION

### Field of the Invention

The present invention relates to a camera module, and more specifically to a camera module equipped with a lens unit and an image pickup device.

### Description of the Prior Art

In a camera module having a relatively compact size equipped in electronic devices such as a cellular phone and the like, a CMOS sensor or a CCD sensor is used as an image pickup device.

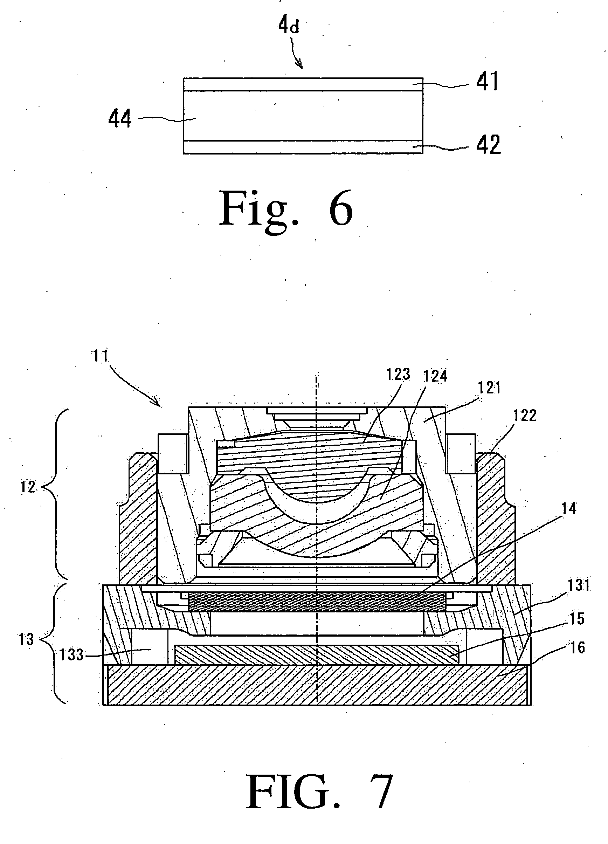

FIG. 7 is a cross sectional view showing a prior art camera module 11. The camera module 11 is composed of a lens unit 12 and an image pickup device portion 13 provided under the lens unit 12.

The lens unit 12 is composed from a barrel 121 in which lenses 123 and 124 are housed and a lens holder 122 in which the barrel 121 is rotatably held. The barrel 121 is screwed in the lens holder 122. Accordingly, the lenses 123 and 124 are moved in a direction of an optical axis when turning the barrel 121 with respect to the holder, whereby focus adjustment is carried out.

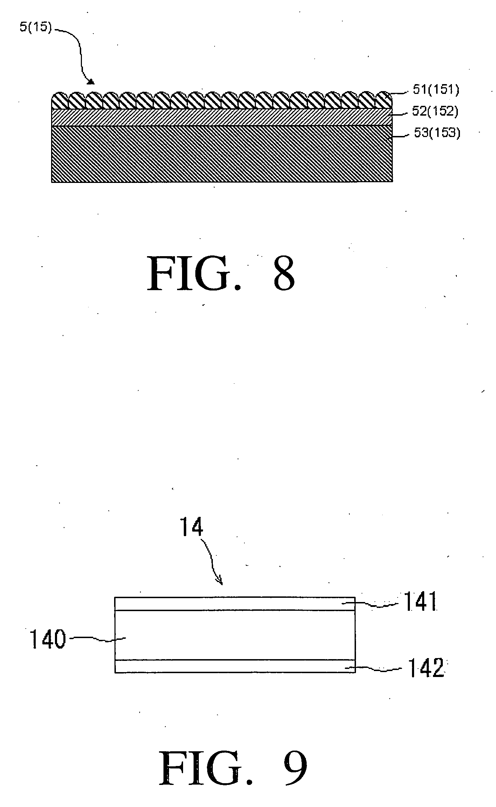

The image pickup device portion 13 is composed from a substrate 16, an image pickup device 51 mounted on the substrate 16 and a base 131 provided on the substrate 16 so as to surround the image pickup device 15. As shown in FIG. 8, the image pickup device 15 of the camera module 11 is provided with a micro lens 151, a color filter 152 and a sensor device 153 which are laminated in this order from a light incoming side (from a side in which the lens unit 12 is provided). The color filter 152 which is made of an organic material such as a resin is an essential component for the camera module 11 since the sensor device 153 itself cannot recognize a color of light.

As shown in FIG. 7, the camera module 11 is provided with an infrared (IR) cut filter 14 for protecting the image pickup device 15 from infrared (IR). The infrared (IR) cut filter 14 is mounted on the base 131 so as to be positioned between the lens unit 12 and the image pickup device 15. Further, as shown in FIG. 9, the infrared cut filter 14 has a base material 140 which is made of white sheet glass. The base material 140 is provided with an AR coating layer 141 on one surface thereof facing the lens unit 12 and an infrared (IR) cut layer 142 on the other surface thereof facing the image pickup device 15. The AR coating layer 141 is a dielectric film for preventing and reducing undesirable reflection on the surface of the base material 140 facing the lens unit 12. On the other hand, the infrared (IR) cut layer 142 is a dielectric film for reflecting infrared while transmitting visible light.

Further, as shown in FIG. 7, the image pickup device portion 13 is provided with an image pickup device housing space 133 surrounded by the substrate 16, the base 131 and the infrared (IR) cut filter 14 so as to seal the image pickup device 15 therein.

An ultraviolet curable resin is utilized for bonding each of the components of the camera module 11. For this purpose, in the manufacturing process of the cameral module 11, the components thereof are irradiated with ultraviolet to cure the ultraviolet curable resin. However, there is a problem in that the color filter 152 made of an organic material such as a resin is likely to be deteriorated since the organic material is oxidized due to the ultraviolet irradiation.

### SUMMARY OF THE INVENTION

In view of the problem described above, it is an object of the present invention to provide a camera module capable of preventing deterioration of a color filter caused by ultraviolet irradiation in a manufacturing process.

In order to achieve the above object, the present invention is directed to a camera module comprising a substrate, an image pickup device mounted on the substrate, the image pickup device being provided with a color filter which recognizes a color of incoming light, a base mounted on the substrate so as to surround the image pickup device, a lens unit provided on the base and an infrared (IR) cut filter provided on the base so as to be positioned between the lens unit and the image pickup device, wherein the infrared (IR) cut filter further comprises ultraviolet (UV) cut means for preventing the color filter from being irradiated with ultraviolet.

In the camera module having such a structure, even if enough amount of ultraviolet is supplied to the camera module to cure an ultraviolet curable resin for bonding each of the components in the manufacturing process thereof, the ultraviolet (UV) cut means in the infrared (IR) cut filter can prevent the supplied ultraviolet (UV) from transmitting to the image pickup device. This makes it possible to prevent the deterioration of the color filter provided in the image pickup device, which results im improved productivity of the camera module. In addition to this, the ultraviolet (UV) cut means can prevent ultraviolet from transmitting to the image pickup device even after the camera module is manufactured. This means that the deterioration of the color filter can be prevented for a long period of time, namely the durability of the camera module against ultraviolet can be improved.

In the camera module according to the present invention, it is preferred that the infrared (IR) cut filter comprises a base material having both major surfaces, an AR coating layer provided on one major surface of the base material and an infrared (IR) cut layer provided on the other major surface of the base material, wherein the ultraviolet (UV) cut means is provided on the one surface of the base material where the the AR coating layer is provided.

According to the infrared (IR) cut filter having such a structure, it is possible to provide the ultraviolet (UV) cut means in the infrared (IR) cut filter easily.

In the camera module described above, it is preferred that the ultraviolet (UV) cut means is provided between the base material and the AR coating layer.

This makes it possible to shield the color filter from ultraviolet (UV) without impairing the antireflection function of the AR coating layer.

In the camera module according to the present invention, it is preferred that the infrared (IR) cut filter comprises a base material having both major surfaces, an AR coating layer provided on one major surface of the base material and an infrared (IR) cut layer provided on the other major surface of the base material, wherein the ultraviolet (UV) cut means is provided on the other major surface of the base material where the infrared (IR) cut layer is provided.

According to the infrared (IR) cut filter having such a structure, it is possible to provide the ultraviolet (UV) cut means in the infrared (IR) cut filter easily.

In the camera module according to the present invention, it is preferred that the infrared (IR) cut layer has one surface facing the base material and the opposite surface, and the ultraviolet (UV) cut means is provided on at least one of these surfaces.

This makes it possible to shield the color filter from ultraviolet (UV) without impairing the function of the infrared (IR) cut layer.

In the camera module according to the present invention, it is preferred that the infrared (IR) cut filter comprises a base material having both major surfaces, an AR coating layer provided on one major surface of the base material and an infrared (IR) cut layer provided on the other major surface of the base material, wherein the infrared (IR) cut layer has a function of the ultraviolet (UV) cut means.

This also makes it possible to shield the color filter from ultraviolet (UV) without impairing the function of the infrared (IR) cut layer.

In the camera module according to the present invention, it is preferred that the ultraviolet (UV) cut means comprises a dielectric film having an optical film thickness which is equal to a value obtained by multiplying a quarter of the wavelength of ultraviolet by odd number.

This makes it possible to shield the color filter from ultraviolet (UV) effectively as well as to change the film thickness of the dielectric film into an arbitrary thickness.

In the camera module according to the present invention, it is preferred that the infrared (IR) cut filter comprises a base material having both major surfaces, an AR coating layer 41 provided on one major surface of the base material and an infrared (IR) cut layer provided on the other major surface of the base material, wherein the base material of the infrared (IR) cut filter is made of ultraviolet absorbing glass and the base material itself serves as the ultraviolet (UV) cut means.

This also makes it possible to shield the color filter from ultraviolet (UV) without impairing the antireflection function of the AR coating layer and the function of the infrared (IR) cut layer.

Another aspect of the present invention is directed to a camera module comprising a lens, an image pickup device having a color filter which recognizes a color of incoming light and an infrared (IR) cut filter provided between the lens and the image pickup device, wherein the infrared (IR) cut filter further comprises ultraviolet (UV) cut means for preventing the color filter from being irradiated with ultraviolet.

In the camera module having such a structure, even if enough amount of ultraviolet is supplied to the camera module to cure an ultraviolet curable resin for bonding each of components in the manufacturing process thereof, the ultraviolet (UV) cut means in the infrared (IR) cut filter can prevent the supplied ultraviolet (UV) from transmitting to the image pickup device. This makes it possible to prevent the deterioration of the color filter provided in the image pickup device, which results in improved productivity of the camera module. In addition to this, the ultraviolet (UV) cut means can prevent ultraviolet from transmitting to the image pickup device even after the camera module is manufactured. This means that the deterioration of the color filter can be prevented for a long period of time, namely the durability of the camera module against ultraviolet can be improved.

### BRIEF DESCRIPTION OF THE DRAWINGS

FIG. 1 is a cross sectional view showing a camera module according to the present invention.
FIG. 2 is a cross sectional view showing an infrared (IR) cut filter according to the first embodiment of the present invention.
FIG. 3 is an enlarged cross sectional view showing an area A shown in FIG. 2.
FIG. 4 is a cross sectional view showing an infrared (IR) cut filter according to the second embodiment of the present invention.
FIG. 5 is a cross sectional view showing an infrared (IR) cut filter according to the third embodiment of the present invention.
FIG. 6 is a cross sectional view showing an infrared (IR) cut filter according to the fourth embodiment of the present invention.
FIG. 7 is a cross sectional view showing a prior art camera module.
FIG. 8 is a cross sectional view showing an image pickup device according to the present invention and the prior art.
FIG. 9 is a cross sectional view showing an infrared (IR) cut filter of the camera module shown in FIG. 7.

### DETAILED DESCRIPTION OF THE INVENTION

Hereinafter, a camera module according to the present invention will be described in detail with reference to the appended drawings.

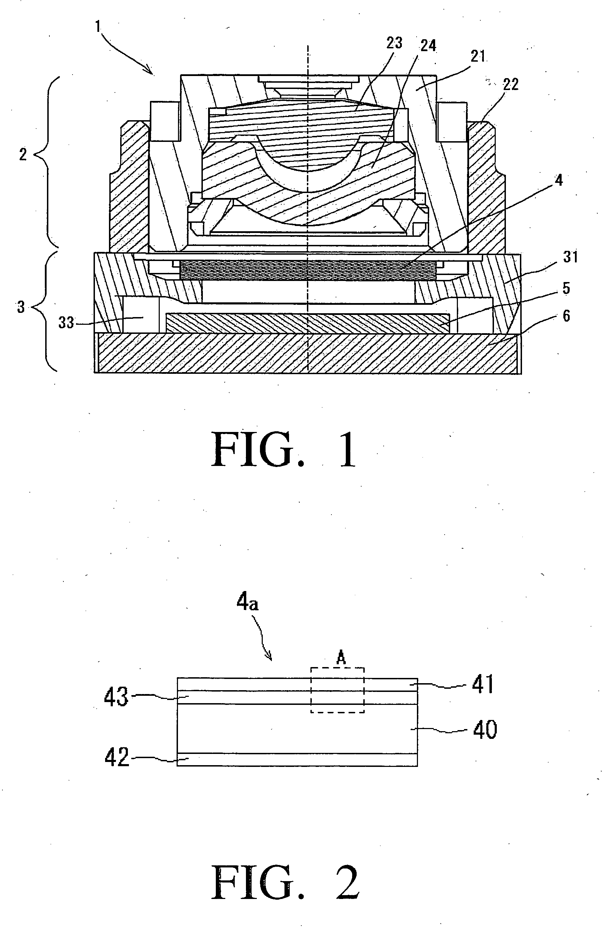

FIG. 1 is a cross sectional view showing a camera module 1 according to the present invention. The camera module 1 includes a lens unit 2 and an image pickup device portion 3 provided under the lens unit 2.

The lens unit 2 is composed from a barrel 21 in which lenses 23 and 24 are housed and a lens holder 22 in which the barrel 21 is rotatably held. The barrel 21 is screwed in the lens holder 22. Accordingly, the lens 23 and the lens 24 are moved in a direction of an optical axis when turning the barrel 21 with respect to the holder 22, whereby focus adjustment is carried out. In this regard, it is to be noted that the lens unit 2 provided with the lens 23 and lens 24 is just one example of an optical system used in a camera module, and the lens unit 2 may be of the type equipped with another optical system such as a lens unit used in an autofocus actuator.

The image pickup device portion 3 includes a substrate 6, an image pickup device 5 mounted on the substrate 6 and a base 31 provided on the substrate 6 so as to surround the image pickup device 5.

As shown in FIG. 8, the image pickup device 5 of the camera module 1 is provided with a micro lens 51, a color filter 52 and a sensor device 53 which are laminated in this order from a light incoming side (from a side in which a lens unit 2 is provided).

The color filter 52 is made of an organic material such as a resin and provided for discriminating a color of light entering the image pickup device 5 thorough the lens unit 2. In a case where the color filter 52 is a primary color filter, the color filter 52 divides the incoming light into three colors of red, green and blue, and each of the three colors is then detected by the sensor device 53. In this way, the image pickup device 5 can discriminate a color of light. On the other hand, in a case where the color filter 52 is a complementary color filter, the color filter 52 divides the incoming light into three colors of cyan, magenta and yellow, and each of the three colors is then detected by the sensor device 53.

In the camera module 1, an infrared (IR) cut filter 4 is provided on the base 31 so as to be positioned between the lens unit 2 and the image pickup device 5. In the image pickup device portion 3, there is provided an image pickup device housing space 33 surrounded by the substrate 6, the base 31 and the infrared (IR) filter 4 so as to seal the image pickup device 5 therein.

As shown in FIG. 2, an infrared (IR) cut filter 4a according to the first embodiment of the present invention is provided with a base material 40 which is made of white sheet glass. On one surface of the base material 40 which faces the lens unit 2 (one major surface of the base material 40), a AR coating layer 41 and a ultraviolet (UV) cut layer 43 as ultraviolet (UV) cut means are laminated. The ultraviolet (UV) cut layer 43 is provided between the AR coating layer 41 and the base material 40 in this embodiment. On the other hand, an infrared (IR) cut layer 42 is provided on the other surface of the base material 40 which faces the image pickup device 5 (the other maj or surface of the base material 40). The infrared (IR) cut layer 42 consists of a dielectric multilayer for reflecting infrared (IR) while transmitting visible light.

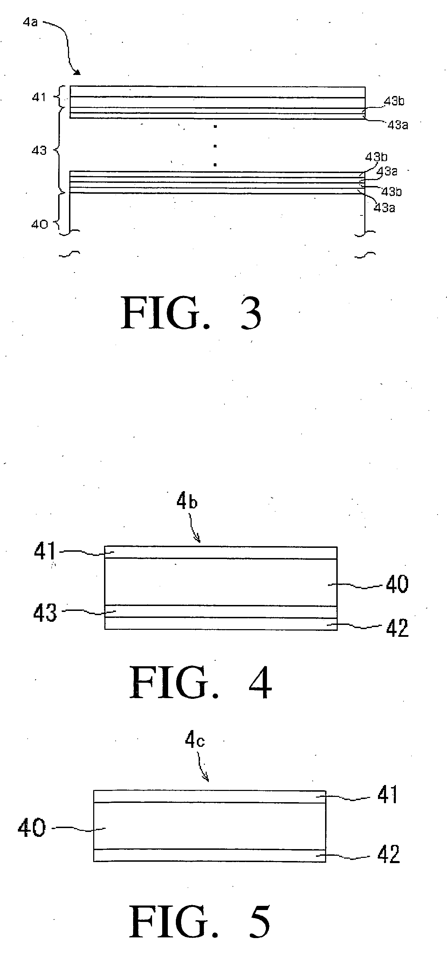

FIG. 3 is an enlarged view of an area A shown in FIG. 2. The AR coating layer 41 is a dielectric layer composed of two layers for preventing or reducing undesirable reflection of light on the one major surface of the base material facing the lens unit 2.

The ultraviolet (UV) cut layer 43 consists of a dielectric multilayer for reflecting ultraviolet (UV) while transmitting visible light. In particular, the ultraviolet (UV) cut layer 43 is a dielectric laminated layer formed from alternately laminated forty films of two different kinds having different refractive indexes. In this embodiment, as shown in FIG. 3, the ultraviolet (UV) cut layer 43 is formed by alternately laminating a first film 43a having a refractive index (n1) of about 2.0 and a second film 43b having a refractive index (n1) of about 1.4. Titanium oxide may be used as a constituent material of the first film 43a and silicon oxide may be used as a constituent material of the second film 43b.

Each of the first film 43a and the second film 43b has a predetermined film thickness depending on a wavelength of ultraviolet (UV) to be shielded. In this embodiment, in a case where ultraviolet vertically enters the infrared (IR) cut filter 4a, an optical film thickness, which is obtained by multiplying a refractive index by a film thickness, of each of silicon oxide and titanium oxide is set to be about a quarter of the wavelength of ultraviolet.

As described above, the ultraviolet (UV) cut layer 43 has the structure in which two kinds of dielectric films having different refractive indexes are alternately laminated. This makes it possible to prevent ultraviolet (UV) from transmitting to the image pickup device 5 through the infrared (IR) cut filter 4a by means of interference with and reflection of ultraviolet (UV).

FIG. 4 shows an infrared (IR) cut filter 4b of a camera module 1 according to the second embodiment of the present invention. In this embodiment, the ultraviolet (UV) cut layer 43 which serves as ultraviolet (UV) cut means is not provided on the one major surface of the base material 40 where the AR coating layer 41 is provided but provided on the other major surface of the base material where the infrared (IR) cut layer 42 is provided. In particular, the ultraviolet (UV) cut layer 43 is provided between the base material 40 and the infrared (IR) cut layer in this embodiment.

FIG. 5 shows an infrared (IR) cut filter 4c of a camera module 1 according to the third embodiment of the present invention. In this embodiment, the infrared (IR) cut layer 42 which can also reflect and interfere with ultraviolet is provided in the infrared (IR) cut filter 4c, namely the infrared (IR) cut layer 42 it self also functions as the ultraviolet (UV) cut means of the present invention. As shown in the drawing, the infrared (IR) cut layer 42 is provided on the other major surface of the base material 40 which is opposed to the one major surface thereof on which the AR coat layer 41 is provided.

In the first, second and third embodiments described above, it is to be noted that the base material 40 can also be made of a transparent resin such as polycarbonate and the like.

FIG. 6 shows an infrared (IR) cut filter 4d of a camera module 1 according to the fourth embodiment of the present invention. In this embodiment, SF11 glass that is ultraviolet absorbing glass is used as a substrate 44 of the infrared (IR) cut filter 4d, and the SF11 grass functions as ultraviolet (UV) cut means. Further, the AR coating layer 41 is provided on the one major surface of the substrate 44 facing the lens unit 2 and the infrared (IR) cut layer 42 is provided on the other major surface thereof facing the image pickup device 5. Since SF11 glass has property of absorbing ultraviolet, the substrate 44 formed of the glass can prevent ultraviolet from transmitting to the image pickup device 5.

In the camera module 1 of the above embodiments, the infrared (IR) cut filter 4 having ultraviolet (UV) cut means is mounted on the base 31 so as to be positioned between the lens unit 2 and the image pickup device 5. Accordingly, the ultraviolet (UV) cut means of the infrared (IR) cut filter 4 prevents ultraviolet from transmitting to the image pickup device 5 even if enough amount of ultraviolet is supplied to the camera module 1 to cure an ultraviolet curable resin for bonding each of the components of the camera module 1 in the manufacturing process. This makes it possible to prevent the deterioration of the color filter 52 which is likely to be caused by ultraviolet irradiation, whereby enabling to improve productivity of the camera module 1. In addition to this, even if ultraviolet enters the manufactured camera module 1 through the lens unit 2, it is also possible to prevent the incoming ultraviolet from transmitting to the image pickup device 5 by virtue of the ultraviolet (UV) cut means. Namely, it is possible to prevent the deterioration of the color filter 52 in the camera module 1 both during the manufacturing process and also after being manufactured. In this way, the deterioration of the color filter 52 can be prevented for a long period of time, thus durability of the camera module 1 against ultraviolet can be improved.

Although the ultraviolet (UV) cut layer 43 serving as ultraviolet (UV) cut means is provided between the base material 40 and the infrared (IR) cut layer 42 in the camera module 1 according to the second embodiment described above, the present invention is not limited thereto. The ultraviolet (UV) cut layer 43 may be provided on the infrared (IR) cut layer 42 so as to face the image pickup device 5.

Further, although the ultraviolet (UV) cut layer 43 serving as ultraviolet (UV) cut means consists of a dielectric multilayer in the camera module 1 according to each of the first and second embodiments described above, the present invention is not limited thereto. The ultraviolet (UV) cut layer 43 may also consist of a dielectric single layer, for example.

Furthermore, although each of the films in the dielectric multilayer constituting the ultraviolet (UV) cut layer 43 has the optical film thickness, which is obtained by multiplying a refractive index by a film thickness, of about a quarter of the wavelength of ultraviolet in the camera module 1 according to each of the first and second embodiments described above, the present invention is not limited thereto. The optical film thickness of each of the films may be set so as to be equal to a value obtained by multiplying a quarter of the wavelength of ultraviolet by odd number.

Moreover, although the lens unit 2 and the base 31 are constructed as separate members in the camera module 1 according to each of the embodiments described above, the present invention is not limited thereto. The lens unit 2 and the base 31 may be integrally formed as a united body and the infrared (IR) cut filter having ultraviolet cut means may be provided therein.

## Claims

1. A camera module comprising:
a substrate (6);
an image pickup device (5) mounted on the substrate (6), the image pickup device (5) being provided with a color filter (52) which recognizes a color of incoming light;
a base (31) mounted on the substrate (6) so as to surround the image pickup device (5);
a lens unit (2) provided on the base (31); and
an infrared (IR) cut filter (4) provided on the base (31) so as to be positioned between the lens unit (2) and the image pickup device (5); wherein the infrared (IR) cut filter (4) further comprises ultraviolet (UV) cut means for preventing the color filter (52) from being irradiated with ultraviolet.

2. The camera module as claimed in claim 1, wherein the infrared (IR) cut filter (4) comprises a base material (40) having both major surfaces, an AR coating layer (41) provided on one major surface of the base material (40) and an infrared (IR) cut layer (42) provided on the other major surface of the base material (40), wherein the ultraviolet (UV) cut means is provided on the one major surface of the base material (40) where the AR coating layer (41) is provided.

3. The camera module as claimed in claim 2, wherein the ultraviolet (UV) cut means is provided between the base material (40) and the AR coating layer (41).

4. The camera module as claimed in claim 1, wherein the infrared (IR) cut filter (4) comprises a base material (40) having both major surfaces, an AR coating layer (41) provided on one major surface of the base material (40) and an infrared (IR) cut layer (42) provided on the other major surface of the base material (40), wherein the ultraviolet (UV) cut means is provided on the other major surface of the base material (40) where the infrared (IR) cut layer (42) is provided.

5. The camera module as claimed in claim 4, wherein the infrared (IR) cut layer (42) has one surface facing the base material (40) and the opposite surface thereof, and the ultraviolet (UV) cut means is provided on at least one of these surfaces.

6. The camera module as claimed in claim 1, wherein the infrared (IR) cut filter comprises a base material having both major surfaces; an AR coating layer provided on one major surface of the base material and an infrared (IR) cut layer provided on the other major surface of the base material, wherein the infrared (IR) cut layer has a function of the ultraviolet (UV) cut means.

7. The camera module as claimed in any one of claims 2 to 6, wherein the ultraviolet (UV) cut means consists of a dielectric film having an optical film thickness which is equal to a value obtained by multiplying a quarter of the wavelength of ultraviolet by odd number.

8. The camera module as claimed in claim 1, wherein the infrared (IR) cut filter (4) comprises a base material (40) having both major surfaces, an AR coating layer (41) provided on one major surface of the base material (40) and an infrared (IR) cut layer (42) provided on the other major surface of the base material (40), wherein the base material of the infrared (IR) cut filter is made of ultraviolet absorbing glass and the base material itself serves as the ultraviolet (UV) cut means.

9. A camera module comprising:
a lens;
an image pickup device having a color filter which recognizes a color of incoming light; and
an infrared (IR) cut filter provided between the lens and the image pickup device; wherein the infrared (IR) cut filter further comprises an ultraviolet (UV) cut means for preventing the color filter from being irradiated with ultraviolet.
